# EUROPÄISCHE PATENTSCHRIFT

(11) **EP 2 250 367 B1**
(45) Veröffentlichungstag und Bekanntmachung des Hinweises auf die Patenterteilung: **17.08.2011**
(21) Anmeldenummer: 09728196.8
(22) Anmeldetag: 03.04.2009
(51) Int. Cl.: F03B 3/04, F03B 11/00, F03B 13/00, F03B 13/10, H02K 7/18

(54) **ROHRTURBINEN-GENERATOREINHEIT**
TUBULAR TURBINE GENERATOR UNIT
ENSEMBLE TURBINE BULBE-ALTERNATEUR

(30) Priorität: 03.04.2008 DE 102008017537
(43) Veröffentlichungstag der Anmeldung: 17.11.2010
(73) Patentinhaber: Voith Patent GmbH, 89522 Heidenheim (DE)
(72) Erfinder: HOLSTEIN, Benjamin, 89520 Heidenheim (DE); PERNER, Norman, 89233 Neu-Ulm (DE); BORRMANN, Hans, 89542 Herbrechtingen (DE)
(74) Vertreter: Dr. Weitzel & Partner
(86) Internationale Anmeldenummer: PCT/EP2009/002455
(87) Internationale Veröffentlichungsnummer: WO 2009/121612

(56) Entgegenhaltungen:
- FR-A- 1 022 783
- FR-A- 2 209 240
- NL-C- 87 583
- US-A- 4 308 464
- US-A- 4 740 711

## Beschreibung

Die Erfindung betrifft eine Rohrturbinen-Generatoreinheit sowie eine Kraftwerkseinrichtung, die eine solche Rohrturbinen-Generatoreinheit in einem Strömungskanal aufweist.

Rohrturbinen werden üblicherweise in Strömungskanälen von Staudämmen angeordnet und weisen neben dem Turbinenlaufrad ein typischerweise birnenförmig ausgebildetes Rohrturbinengehäuse auf. Dabei nimmt das Rohrturbinengehäuse einen elektrischen Generator auf, der über eine Antriebswelle vom Turbinenlaufrad angetrieben wird. Darüber hinaus dient üblicherweise das Rohrturbinengehäuse der Strömungsführung und damit der Verbesserung der Anströmung am Turbinenlaufrad. Entsprechend ist der wesentliche Teil des Rohrturbinengehäuses stromaufwärts zum Turbinenlaufrad angeordnet. Für eine gattungsgemäße Rohrturbinen-Generatoreinheit wird auf die CH 389 769 verwiesen.

Neben großbauenden Rohrturbinen-Generatoreinheiten sind auch kompakte Ausführungen bekannt, die beispielsweise für kleinere Kraftwerkeinrichtungen, etwa Flusswasserkraftwerke, Verwendung finden oder in Form von matrixförmigen Mehrfachanordnungen großbauende Rohrturbinen-Generatoreinheiten ersetzen.

Im Fall großer Rohrturbinen-Generatoreinheiten weisen diese üblicherweise zu Inspektions- und Wartungszwecken eine Zugangsöffnung zum Inneren des Rohrturbinengehäuses auf, wobei der Zutritt meist über einen hohl ausgebildeten Stützpfeiler oder einen separaten Schacht erfolgt, der eine Verbindung zwischen der Wandung des Strömungskanals und dem Rohrturbinengehäuse herstellt. Wartungsaufgaben, für die ein solcher Zutritt in das Innere des Rohrturbinengehäuses notwendig ist, sind insbesondere für die Lager vorzunehmen, die üblicherweise mit Ölschmierung ausgeführt sind. Eine Alternative mit wassergeschmierten Lagern wird durch die JP 2002221141 A2 offenbart. Darüber hinaus erzeugen der elektrische Generator sowie die Komponenten der Leistungselektronik eine solche Abwärme, dass ein zusätzliches Kühlsystem notwendig ist. Die Komponenten des Kühlsystems bedürfen wiederum eines regelmäßigen Services.

Für das einer Rohrturbinen-Generatoreinheit zugeordnete Kühlsystem ist ein hoher konstruktiver Aufwand notwendig. Dabei sind Gestaltungen bekannt, für die außerhalb des Rohrturbinengehäuses angeordnete Wärmetauscher verwendet werden - hierzu wird beispielhaft auf die JP 6042443 A2 verwiesen. Externe Kühlsysteme für das Lageröl sind darüber hinaus aus der JP 5316691 A2 und der US 4308464 A bekannt. Ferner werden innerhalb des Rohrturbinengehäuses ausgebildete Kühleinrichtungen durch die WO 07147187 A1, die JP 6237554 A2 und die AT 403863 B offenbart. Hierfür werden Systeme mit Luftkühlung oder eine Kombination aus Luft- und Flüssigkeitakühlung eingesetzt. Beispielhaft wird auf NL 87 583 C, die als nächstliegender Stand der Technik angesehen wird, und FR 2 209 240 C verwiesen.

Um auf zusätzliche bauliche Maßnahmen zur Kühlung verzichten zu können, wurde durch die EP 1318299 A1 eine wandungsnahe Ausbildung der Komponenten des elektrischen Generators innerhalb des Rohrturbinengehäuses vorgeschlagen, wobei ein permanenterregter Rotor verwendet wird, der ausschließlich durch die Wärmeleitung zur Außenhaut des Rohrturbinengehäuses und den Wärmeabzug durch das vorbeistreichende Umgebungswasser gekühlt wird. Dies stellt jedoch besondere Anforderungen an die Ausgestaltung des elektrischen Generators im Hinblick auf die Materialwahl und die Leistungsauslegung, was die konstruktiven Möglichkeiten einschränkt und die Herstellungskosten des elektrischen Generators erhöht.

Eine weitere Schwierigkeit bekannter Rahrturbinen-Generatoreinheiten ist die Abdichtung des Rohrturbinengehäuse-Innenbereichs zum Umgebungswasser hin. Eine wesentliche Komponente hierfür stellt die Wellendichtung dar, die den Durchtritt der Antriebswelle durch das Rohrturbinengehäuse gegen einen Wasserzutritt absichert. Diese Komponente ist konstruktiv aufwendig, erhöht die Maschinenreibung und kann bei einer Ausbildung mit Verlustschmlerung eine Verschmutzungsquelle für das antreibende Umgebungswasser darstellen. Kann der Zutritt von Umgebungswasser in das Innere des Rohrturbinengehäuses nicht gänzlich ausgeschlossen werden, sind Drainage- bzw. Lenzsysteme notwendig. Hierzu wird exemplarisch auf die JP 10159701 A2 verwiesen. Meist müssen diese Systeme mit Ölabscheidern versehen werden, falls die Lager der Antriebswelle mit Ölschmierung ausgebildet sind.

Der Erfindung liegt die Aufgabe zugrunde, eine Rohrturbinen-Generatoreinheit anzugeben, die die voranstehend beschriebenen Probleme umgeht. Die Rohrturbinen-Generatoreinheit soll sich durch lange Wartungsintervalle auszeichnen. Bevorzugt ist die Rohrturbinen-Generatoreinheit im Wesentlichen wartungsfrei zu gestalten, sodass auf die für eine regelmäßige Inspektion ausgelegte Zugangsmöglichkeit zum Inneren des Rohrturbinengehäuses verzichtet werden kann. Des Weiteren ist eine Kraftwerkseinrichtung anzugeben, die zum Einbau einer solchermaßen wartungsarmen und konstruktiv einfachen Rohrturbinen-Generatoreinheit angelegt ist.

Die voranstehend genannte Aufgabe wird durch die Merkmale des unabhängigen Anspruchs gelöst. Vorteilhafte Ausgestaltungen ergeben sich aus den Unteransprüchen.

Die Erfindung sieht einen flutbaren Raumbereich im Inneren des Rohrturbinengehäuses vor, der im Betrieb der Rohrturbinen-Generatoreinheit mit Wasser geflutet ist. Teil dieses flutbaren Raumbereichs ist der Generatorspalt zwischen dem Generatorläufer und dem Generatorstator des elektrischen Generators. Des Weiteren ist die Lageranordnung zur Lagerung der Antriebswelle zwischen dem Turbinenlaufrad und dem elektrischen Generator mit Wasserschmierung ausgebildet, sodass der Lagerspalt der Lageranordnung ebenfalls zu dem flutbaren Raumbereich im Innern des Rohrturbinengehäuses zählt.

Aufgrund der Flüssigkeitsfüllung innerhalb des Rohrturbinengehäuses dreht der Generatorläufer im Wasser, was zunächst zu Reibungsverlusten führt. Gleichzeitig kann jedoch durch die Wasserführung im flutbaren Raumbereich des Rohrturbinengehäuses und insbesondere durch den Generatorspalt hindurch eine effiziente Abführung der Abwärme des elektrischen Generators bewirkt werden. Aufgrund dieses Umstands ist kein zusätzliches Kühlsystem notwendig, sodass der Energieverbrauch zu dessen Betrieb wegfällt. Hierdurch relativiert sich der Verlust durch die Wasserreibung des in der Flüssigkeit umlaufenden Generatorläufers insbesondere in Relation zur Nennleistung des elektrischen Generators. Darüber hinaus ist für die typischerweise großbauenden Rohrturbinen-Generatoreinheiten der Generatorläufer langsam umlaufend angelegt, sodass die genannten Reibungsverluste in der Gesamtbilanz unwesentlich sind. Für eine bevorzugte Ausgestaltung wird der flutbare Raumbereich durchströmt, demnach sind ein Einlass und ein Auslass für das Umgebungswasser am Rohrturbinengehäuse vorgesehen.

Des Weiteren ergeben sich für eine erfindungsgemäße Rohrturbinen-Generatoreinheit zusätzliche Vorteile. Zum einen ist dies eine geringe Anforderung im Hinblick auf die Abdichtung des Rohrturbinengehäuses, insbesondere fallen Wellendichtungen an der Antriebswelle weg. Entsprechend kann auf Lenzsysteme zur Drainage des Rohrturbinengehäuses verzichtet werden.

Ferner ergeben sich Vorteile aufgrund einer verbesserten Standzeit der erfindungsgemäßen Rohrturbinen-Generatoreinheit. Dies ist zum einen auf die effiziente Kühlung zurückzuführen und zum anderen auf die Möglichkeit des Einsatzes robuster, wassergeschmierter Gleitlager anstatt einer ölgeschmierten Lagerung für die Antriebswelle. Die hierfür verwendbaren Gleitlagerpaarungen sind im Wesentlichen verschleißfrei. Darüber hinaus ist aufgrund der Flüssigkeitsführung durch den Lagerspalt der Lageranordnung eine effiziente Lagerkühlung gegeben.

Die voranstehend genannte, verbesserte Ausfallsicherheit der Rohrturbinen-Generatoreinheit ermöglicht es, auf Einrichtungen, die der regelmäßigen Inspektionen dienen, zu verzichten. Entsprechend ist es nicht notwendig, eine trockene Verbindung zum Zugang in das Innere des Turbinengehäuses vorzusehen. Dabei können die Tragstreben zur Halterung der Rohrturbinen-Generatoreinheit innerhalb des Strömungskanals vereinfacht werden und im Hinblick auf die Strukturfestigkeit und eine geringe Verblockung der Strömung im Strömungskanal ausgelegt werden.

Gemäß einer vorteilhaften Ausgestaltung der Rohrturbinen-Generatoreinheit ist lediglich eine Zugangsöffnung in das Innere des Rohrturbinengehäuses anzulegen, die im unwahrscheinlichen Fehlerfall verwendet wird. Hierzu kann ein Reparaturverfahren nach einer vorübergehenden Trockenlegung des Strömungskanals ausgeführt werden, wobei hierfür eine Sperreinrichtung für den Strömungskanal vorgesehen sein kann. Alternativ kann ein Taucher eingesetzt werden, der über eine Schleuseneinrichtung als notfallmäßige Zugangsöffnung Zutritt in das Innere des Rohrturbinengehäuses erlangt. Für diesen Fall wird bevorzugt eine Ausgestaltung vorgesehen, für die zum Trockenlegen des flutbaren Raumbereichs innerhalb des Rohrturbinengehäuses eine Pumpeneinrichtung verwendet wird, die für Reparaturarbeiten einen trockenen Bereich im Rohrturbinengehäuse schafft.

Kleinere Rohrturbinen können auch aus dem Strömungskanal herausbewegt und mittels eines Kransystems zur Reparatur über den Wasserspiegel angehoben werden.

Nachfolgend wird die Erfindung anhand eines Ausführungsbeispiels in Verbindung mit einer Figurendarstellung genauer erläutert. In dieser ist im Einzelnen Folgendes dargestellt:

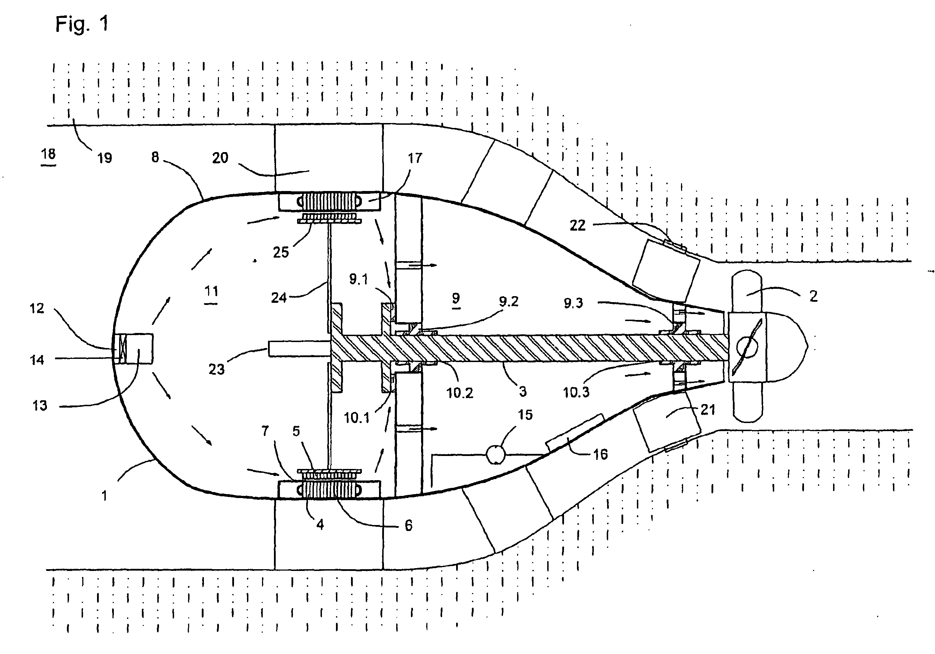

- Figur 1: zeigt eine erfindungsgemäß gestaltete Rohrturbinen-Generatoreinheit im Axialschnitt.

Figur 1 skizziert mit dem Turbinenlaufrad 2, der Antriebswelle 3, dem elektrischen Generator 4, umfassend einen Generatorläufer 5, einen Generatorstator 6 und einen zwischen diesen ausgebildeten Generatorspalt 7, sowie dem Rohrturbinengehäuse 8 die Grundkomponenten einer Rohrturbinen-Generatoreinheit 1.

Erfindungsgemäß liegt im Inneren des Rohrturbinengehäuses 8 ein flutbarer Raumbereich 11 vor, der im Betrieb der Rohrturbinen-Generatoreinheit 1 geflutet ist. Bevorzugt wird hierzu über einen Flüssigkeitseinlass 12 eine fluidische Verbindung zum Außenbereich und damit zum Umgebungswasser hergestellt. Um den Eintrag von Sedimenten in dem flutbaren Bereich 11 zu verringern, ist bevorzugt eine Filtereinrichtung 13 vorgesehen.

Zur bevorzugten Durchströmung des Rohrturbinengehäuses sind in Figur 1 Pfeile, die die Strömungsrichtung verdeutlichen sollen, dargestellt. Ersichtlich ist, dass der Generatorspalt 7 durchströmt wird. Des Weiteren gelangt das zugeführte Wasser bis zu den Komponenten der Lageranordnung 9, wobei insbesondere die Wasserführung zu den Lagerspalten 10.1, 10.2 und 10.3 reicht. Darüber hinaus sind in den Haltestrukturen Durchgangsöffnungen vorgesehen, um für eine vorteilhafte Ausgestaltung eine hinreichende Durchströmung des gesamten Innenbereichs im Rohrturbinengehäuse 8 zu bewirken. Für die dargestellte Ausführungsform tritt das durch das Rohrturbinengehäuse 8 geleitete Umgebungswasser im Spaltbereich zwischen dem Rohrturbinengehäuse 8 und der Wasserturbine 2 aus.

Des Weiteren ist der Flüssigkeitseinlass 12 mit einer Verschlusseinrichtung 14 ausgestattet, die es erlaubt, in Verbindung mit der Pumpeinrichtung 15 den flutbaren Raumbereich 11 zu entleeren. Durch diese Maßnahme kann bei einer zwingenden Wartung der Komponenten der Rohrturbinen-Generatoreinheit 1 ein Servicetechniker über die Zugangsöffnung 16 einsteigen. Wie dargestellt, wird bevorzugt eine einfache Zugangsöffnung 16 gewählt, die als Noteinstieg gedacht ist und zum Umgebungswasserbereich hin mündet. Das heißt, es wird auf einen trockenen Zugang von der Wandung 19 des Strömungskanals 18 aus verzichtet. Entsprechend entsteht kein zusätzliches Strömungshindernis und die Rohrturbinen-Generatoreinheit 1 kann über strömungsgünstig ausgebildete Tragstreben 20 innerhalb des Strömungskanals 18 gehaltert werden.

Durch die Wasserfülllung des flutbaren Raumbereichs 11 während des Betriebs der Rohrturbinen-Generatoreinheit 1 läuft der Generatorläufer 5 innerhalb der Flüssigkeit um. Entsprechend wird bevorzugt, dessen äußere Hülle so zu gestalten, dass die Reibungsverluste im Wasserkörper möglichst gering sind. Hierzu ist eine bevorzugte Ausgestaltung mit einem scheibenförmigen Tragelement 24 und einem Tragring 25 versehen, wobei letzterer die magnetischen Komponenten des Generatorläufers 5 trägt. Dabei kann der elektrische Generator 4 als Synchrongenerator ausgebildet sein und der Generatorläufer 5 kann Permanentmagneten umfassen. Alternativ oder zusätzlich können Erregerwicklungen und eine Erregermaschine vorgesehen sein, wobei eine kontaktlose Übertragung der Erregerleistung auf den Generatorläufer 5 im Falle einer Fremderregung bevorzugt wird. Dies ist im Einzelnen nicht dargestellt.

Innerhalb des Generatorspalts 7 zwischen dem Generatorstator 6 und dem Generatorläufer 5 erstreckt sich der flutbare Raumbereich und damit die Wasserführung im Betrieb. Entsprechend ist der elektrische Generator 4 zu kapseln, wobei bevorzugt ein wasserdicht abgeschlossener Raumbereich 17 vorgesehen ist, in den elektrische Komponenten des elektrischen Generators 4 aufgenommen sind. Hierbei kann eine Spaltrohranordnung vorgesehen sein, die zur Kapselung der Komponenten des Generatorstators 6 dient. Ferner wird der abgeschlossene Raumbereich 17 bevorzugt mit einem Wärmeträgermedium, einem Öl oder einem Ester, zur Verbesserung der thermischen Ankopplung gefüllt.

Im Falle einer Fremderregung sind die Komponenten des Generatorläufers 5 entsprechend zu kapseln. Dabei kann eine Spaltrohranordnung eine Trennwand aus einem elektrisch nicht leitfähigen Material umfassen. Als Alternative wird die Abdichtung des wasserdicht abgeschlossenen Raumbereichs 17 durch Vergussmassen realisiert, die die abzukapselnden Komponenten durch Vergießen absichern. Entsprechend können die Komponenten der Leistungselektronik im wasserdicht abgeschlossenen Raumbereich 17 untergebracht sein, der aus mehreren separaten Teilräumen bestehen kann.

Des Weiteren ist in der Figurendarstellung eine Lageranordnung 9 zur Lagerung der Antriebswelle 3 dargestellt. Diese umfasst ein einseitiges Axiallager 9.1, ein erstes Radiallager 9.2 sowie ein zweites Radiallager 9.3. Die einzelnen Lager der Lageranordnung 9 weisen jeweils einen Lagerspalt 10.1, 10.2 und 10.3 auf, der dem flutbaren Raumbereich 11 zugeordnet ist und im Betrieb geflutet ist.

Dabei können wassergeschmierte Gleitlager eingesetzt werden, die mit einer Paarung aus einem harten und einem weichen bzw. elastischen Gleitlagerwerkstoff versehen sind. Eine solche Anordnung ist äußerst robust und auch gegenüber eindringenden Sedimenten standfest. Entsprechend resultiert eine Lageranordnung 9, die im Wesentlichen wartungsfrei ist. Darüber hinaus sind keine Maßnahmen zur Lagerkühlung zu treffen, da eine effiziente Wärmeabfuhr aufgrund der Flutung der Lagerspalte 10.1, 10.2, 10.3 sichergestellt ist.

Ferner zeigt die Figurendarstellung einen innerhalb des Rohrturbinengehäuses 8 angeordneten Turbinenblattverstellmechanismus 23. Dieser wirkt durch eine hohl ausgebildete Antriebswelle 3 auf die Schaufeln des Turbinenlaufrads 2 und stellt deren Anstellwinkel gegenüber der Anströmung ein. Des Weiteren ist aus der Figurendarstellung ein Leitapparat 21 ersichtlich, der stromaufwärts zum Turbinenlaufrad 2 im Strömungskanal 18 der Kraftwerkeinrichtung angeordnet ist.

Um auf weitere, wartungsanfällige Komponenten innerhalb des schwer zugänglichen Rohrturbinengehäuses 8 verzichten zu können, ist die Stelleinrichtung für den Leitapparat 22 in die Wandung 19 des Strömungskanals für die dargestellte, bevorzugte Ausgestaltung aufgenommen. Zu diesen kann ein Zugangsschacht geführt werden (nicht dargestellt). Als weitere Komponente der Kraftwerkeinrichtung mit der erfindungsgemäßen Rohrturbinen-Generatoreinheit 1 kann beispielsweise ein Sperrtor zur Trockenlegung des Strömungskanals 18 vorgesehen sein, ein solches ist jedoch in der Figurendarstellung nicht skizziert.

Für eine alternative Ausgestaltung der Erfindung ist es ferner möglich, die Wasserfüllung des flutbaren Raumbereichs im Inneren des Rohrturbinengehäuses nicht durch den Zutritt von Umgebungswasser, sondern mittels einer Zuleitung von Filterwasser zu bewirken. Dies kann beispielsweise über eine Leitungsverbindung zur Wandung 19 des Strömungskanals bewirkt werden. Eine solche Ausgestaltung ist im Einzelnen nicht in der Figurendarstellung ersichtlich.

Weitere Ausgestaltungen der Erfindung sind im Rahmen der nachgeschlossenen Schutzansprüche denkbar.

### Bezugszeichenliste

- 1: Rohrturbinen-Generatoreinheit
- 2: Turbinenlaufrad
- 3: Antriebswelle
- 4: elektrischer Generator
- 5: Generatorläufer
- 6: Generatorstator
- 7: Generatorspalt
- 8: Rohrturbinengehäuse
- 9: Lageranordnung
- 9.1: Axiallager
- 9. 2: erstes Radiallager
- 9.3: zweites Radiallager
- 10.1, 10.2, 10.3: Lagerspalt
- 11: flutbarer Raumbereich
- 12: Flüssigkeitseinlass
- 13: Filtereinrichtung
- 14: Verschlusseinrichtung
- 15: Pumpeinrichtung
- 16: Zugangsöffnung
- 17: wasserdicht abgeschlossener Raumbereich
- 18: Strömungskanal
- 19: Wandung des Strömungskanals
- 20: Tragstrebe
- 21: Leitapparat
- 22: Stelleinrichtung des Leitapparats
- 23: Turbinenblattverstellmechanismus
- 24: scheibenförmiges Tragelement
- 25: Tragring

## Patentansprüche

1. Rohrturbinen-Generatoreinheit (1) umfassend
1.1 ein Turbinenlaufrad (2);
1.2 eine Antriebswelle (3), die mit dem Turbinenlaufrad (2) drehstarr verbunden ist;
1.3 einen elektrischen Generator (4) mit einem Generatorläufer (5) und einem Generatorstator (6), wobei der Generatorläufer (5) wenigstens mittelbar von der Antriebswelle (3) angetrieben wird;
1.4 ein Rohrtubinengehäuse (8), das den elektrischen Generator (4) umschließt;
1.5 eine Lageranordnung (9), die innerhalb des Rohrturbinengehäuses angeordnet ist und die zur Lagerung der Antriebswelle (3) dient;
1.6 einen flutbareren Raumbereich (11) im Inneren des Rohrturbinengehäuses, der im Betrieb der Rohrturbinen-Generatoreinheit (1) mit Wasser geflutet ist,
**dadurch gekennzeichnet, dass**
1.7 der Generatorspalt (7) zwischen dem Generatorläufer (5) und dem Generatorstator (6) und der Lagerspalt (10.1, 10.2, 10.3) der Lageranordnung (9) Teil des flutbaren Raumbereichs (11) sind.

2. Rohrturbinen-Generatoreinheit (1) nach Anspruch 1, **dadurch gekennzeichnet, dass** der flutbare Raumbereich (11) über einen Flüssigkeitseinlass (12) mit dem Umgebungswasser außerhalb des Rohrturbinengehäuses in fluidischer Verbindung steht.

3. Rohrturbinen-Generatoreinheit (1) nach Anspruch 2, **dadurch gekennzeichnet, dass** der Flüssigkeitseinlass (12) eine Verschlusseinrichtung (14) zur Abtrennung des flutbaren Raumbereichs (11) vom Umgebungswasserbereich umfasst.

4. Rohrturbinen-Generatoreinheit (1) nach Anspruch 3, **dadurch gekennzeichnet, dass** der Rohrturbinen-Generatoreinheit (1) eine Pumpeneinrichtung (15) zum Trockenlegen des flutbaren Raumbereichs (11) zugeordnet ist.

5. Rohrturbinen-Generatoreinheit (1) nach einem der Ansprüche 2 - 4, **dadurch gekennzeichnet, dass** der Rohrturbinen-Generatoreinheit (1) eine Filtereinrichtung (13) zur Filterung des am Flüssigkeitseinlass (12) einströmenden Umgebungswassers zugeordnet ist.

6. Rohrturbinen-Generatoreinheit (1) nach einem der vorausgehenden Ansprüche, **dadurch gekennzeichnet, dass** das Rohrturbinengehäuse (8) eine Zugangsöffnung (16) zum flutbaren Raumbereich (11) umfasst.

7. Rohrturbinen-Generatoreinheit (1) nach einem der vorausgehenden Ansprüche, **dadurch gekennzeichnet, dass** innerhalb des Rohrturbinengehäuses (8) ein wasserdicht abgeschlossener Raumbereich (17) zur Aufnahme von Komponenten des Generatorläufers (5) und/oder des Generatorstators (6) und/oder der Leistungselektronik vorliegt.

8. Rohrturbinen-Generatoreinheit (1) nach Anspruch 7, **dadurch gekennzeichnet, dass** der wasserdicht abgeschlossene Raumbereich (17) ein Abdichtungsmittel in Form eines Spaltrohres und/oder einer Vergussmasse umfasst.

9. Kraftwerkseinrichtung, umfassend einen Strömungskanal (18) mit einer darin angeordneten Rohrturbinen-Generatoreinheit (1) nach einem der vorausgehenden Ansprüche.

10. Kraftwerkseinrichtung nach Anspruch 9, **dadurch gekennzeichnet, dass** die Kraftwerkseinrichtung einen Leitapparat (21) umfasst, der dem Turbinenlaufrad (2) der Rohrturbinen-Generatoreinheit (1) zugeordnet ist, wobei der Leitapparat (21) eine Stelleinrichtung (22) aufweist, die in einer Wandung des Strömungskanals (19) angeordnet ist.

11. Kraftwerkseinrichtung nach einem der Ansprüche 9 oder 10, **dadurch gekennzeichnet, dass** ein stromaufwärts zur Rohrturbinen-Generatoreinheit (1) angeordnetes Sperrtor zur Trockenlegung des Strömungskanals (18) vorgesehen ist.

## Claims

1. A tubular turbine generator unit (1) including
1.1 a turbine rotor disk (2);
1.2 a drive shaft (3) which is torsion-proof connected with the turbine rotor disk (2);
1.3 an electrical generator (4) with a generator rotor (5) and a generator stator (6), wherein the generator rotor (5) is driven at least via the drive shaft (3);
1.4 a tubular turbine housing (8), which encloses the electrical generator (4);
1.5 a bearing assembly (9), which is arranged inside the tubular turbine housing and enables to support the drive shaft (3);
1.6 a floodable space (11) inside the tubular turbine housing, which is flooded with water during operation of the tubular turbine generator unit (1),
**characterised in that**
1.7 the generator gap (7) between the generator rotor (5) and the generator stator (6) and the bearing gap (10.1, 10.2, 10.3) of the bearing assembly (9) are part of the floodable space (11).

2. A tubular turbine generator unit (1) according to claim 1, **characterised in that** the floodable space (11) is in liquid connection with the surrounding water outside the tubular turbine housing using a liquid inlet (12).

3. A tubular turbine generator unit (1) according to claim 2, **characterised in that** the liquid inlet (12) includes a closing device (14) for separating the floodable space (11) from the surrounding water area.

4. A tubular turbine generator unit (1) according to claim 3, **characterised in** the tubular turbine generator unit (1) includes a pumping device (15) for drying up the floodable space (11).

5. A tubular turbine generator unit (1) according to any of the claims 2-4, **characterised in that** the tubular turbine generator unit (1) includes a filtering device (13) for filtering the inflowing surrounding water at the liquid inlet (12).

6. A tubular turbine generator unit (1) according to one of the previous claims, **characterised in that** the tubular turbine housing (8) comprises an inlet opening (16) to the floodable space (11).

7. A tubular turbine generator unit (1) according to one of the previous claims, **characterised in that** a watertight sealed space (17) is arranged inside the tubular turbine housing (8) for accommodating components of the generator rotor (5) and/or of the generator stator (6) and/or of the power electronics.

8. A tubular turbine generator unit (1) according to claim 7, **characterised in that** the watertight sealed space (17) includes a sealant in the form of a gap tube and/or of a casting compound.

9. A power station facility, including a flow channel (18) with a tubular turbine generator unit (1) arranged therein according to one of the previous claims.

10. A power station facility according to claim 9, **characterised in that** the power station facility includes a guide apparatus (21),which equips the turbine rotor disk (2) of the tubular turbine generator unit (1), wherein the guide apparatus (21) presents an adjustment device (22) arranged in a side surface of the flow channel (19)

11. A power station facility according to any of the claims 9 or 10, **characterised in that** a flood gate is arranged upstream of the tubular turbine generator unit (1) for drying up the flow channel (18).

## Revendications

1. Groupe générateur pour turbine bulbe (1) comprenant
1.1 une roues à aubes de turbine (2):
1.2 un arbre d'entraînement (3), solidaire de la roues à aubes de turbine (2) de manière fixe en rotation;
1.3 un générateur électrique (4) avec un rotor de générateur (5) et un stator de générateur (6), où le rotor de générateur (5) est entraîné au moins indirectement par l'arbre d'entraînement (3);
1.4 un carter de turbine bulbe (6) entourant le générateur électrique (4);
1.5 un agencement de paliers (9), disposé à l'intérieur du carter de turbine bulbe et permettant de loger l'arbre d'entraînement (3);
1.6 une zone d'espace inondable (11) à l'intérieur du carter de turbine bulbe, est inondée d'eau pendant l'exploitation du groupe générateur pour turbine bulbe (1),
**caractérisé en ce que**
1.7 l'entretoise de générateur (7) entre le rotor de générateur (5) et le stator de générator (6) et l'entretoise de palier (10.1, 10.2, 10.3) de l'agencement de paliers (9) font partie de la zone d'espace inondable (11).

2. Groupe générateur pour turbine bulbe (1) selon la revendication 1, **caractérisé en ce que** la zone d'espace inondable (11) est en communication fluide avec l'eau environnante à l'extérieur du carter de turbine bulbe par le biais d'une entrée de liquide.

3. Groupe générateur pour turbine bulbe (1) selon la revendication 2, **caractérisé en ce que** l'entrée de liquide (12) comprend un dispositif de fermeture (14) afin de séparer la zone d'espace inondable (11) de la zone d'eau environnante.

4. Groupe générateur pour turbine bulbe (1) selon la revendication 3, **caractérisé en ce qu'**un dispositif de pompage (15) est associé au groupe générateur pour turbine bulbe (1) pour assécher la zone d'espace inondable (11).

5. Groupe générateur pour turbine bulbe (1) selon l'une quelconque des revendications 2-4, **caractérisé en ce qu'**un dispositif de filtrage (13) est associé au groupe générateur pour turbine bulbe (1) pour assurer le filtrage de l'eau environnante pénétrant au niveau de l'entrée de liquide (12).

6. Groupe générateur pour turbine bulbe (1) selon l'une quelconque des revendications précédentes, **caractérisé en ce que** le carter de turbine bulbe (8) comprend une ouverture d'accès (16) à la zone d'espace inondable (11).

7. Groupe générateur pour turbine bulbe (1) selon l'une quelconque des revendications précédentes, **caractérisé en ce qu'**une zone d'espace (17) obturée de manière étanche à l'eau est aménagée à l'intérieur du carter de turbine bulbe (8) pour recevoir des composants du rotor de générateur (5) et/ou du stator de générator (6) et/ou de l'électronique de puissance.

8. Groupe générateur pour turbine bulbe (1) selon la revendication 7, **caractérisé en ce que** la zone d'espace obturée de manière étanche à l'eau (17) comporte un moyen d'étanchéité sous forme de tube d'entrefer et/ou de masse de coulage.

9. Dispositif générateur d'électricité comprenant un canal d'écoulement (18) disposant d'un groupe générateur pour turbine bulbe (1) situé dans celui-ci selon l'une quelconque des revendications précédentes.

10. Dispositif générateur d'électricité selon la revendication 9, **caractérisé en ce que** le dispositif générateur d'électricité comprend un appareil directeur (21), associé à la roue à aubes de turbine (2) du groupe générateur pour turbine bulbe (1), où l'appareil directeur (21) présente un dispositif de réglage (22) agencé dans une paroi du canal d'écoulement (18).

11. Dispositif générateur d'électricité selon l'une quelconque des revendications 9 ou 10, **caractérisé en ce qu'**une porte de barrage disposée en amont du groupe générateur pour turbine bulbe (1) est prévue pour assécher le canal d'écoulement (16).
